# EUROPEAN PATENT SPECIFICATION

(11) **EP 3 272 225 B1**
(45) Date of publication and mention of the grant of the patent: **03.03.2021**
(21) Application number: 16765244.5
(22) Date of filing: 15.03.2016
(51) Int. Cl.: A23K 10/40

(54) **COMPOSITION FOR FEED ADDITIVE, AND ANIMAL FEED COMPOSITION CONTAINING SAME**
ZUSAMMENSETZUNG FÜR FUTTERZUSATZ UND TIERFUTTERZUSAMMENSETZUNG DAMIT
COMPOSITION D'ADDITIF ALIMENTAIRE, ET COMPOSITION D'ALIMENT POUR ANIMAUX CONTENANT LA COMPOSITION D'ADDITIF ALIMENTAIRE

(30) Priority: 16.03.2015 KR 20150036260
(43) Date of publication of application: 24.01.2018
(73) Proprietor: CJ Cheiljedang Corporation, Seoul 04560 (KR)
(72) Inventor: HEO, In Kyung, Yongin-si Gyeonggi-do 16944 (KR); SON, Sung Kwang, Gyeonggi-do 16994 (KR); CHOI, Jin Geun, Seoul 07593 (KR); KIM, So Young, Gwacheon-si Gyeonggi-do 13803 (KR); SHIN, Yong Uk, Yongin-si Gyeonggi-do 13835 (KR); LEE, Jae Hee, Gyeonggi-do 16365 (KR); SUNG, Jin Woo, Suwon-si Gyeonggi-do 16487 (KR); LEE, Youn Jae, Suwon-si Gyeonggi-do 16438 (KR); RIM, Jin Seong, Incheon 21368 (KR); JUNG, Jun Young, Suwon-si Gyeonggi-do 16433 (KR)
(74) Representative: Dehns
(86) International application number: PCT/KR2016/002586
(87) International publication number: WO 2016/148488

(56) References cited:
- WO-A1-03/015532
- GB-A- 2 297 485
- KR-A- 20010 071 555
- KR-A- 20080 065 629
- KR-A- 20140 146 638
- KR-B1- 100 808 461
- KR-B1- 100 889 434
- US-A1- 2012 178 966
- US-B2- 7 745 195

## Description

### [Technical Field]

The present invention relates a feed additive composition and an animal feed composition containing the same.

### [Background Art]

Methionine is an essential amino acid in mammals, and is used as a raw material for production of animal feeds, food additives, pharmaceutical infusion solutions and pharmaceutical drugs, etc. Methionine can be produced by chemical synthesis or biological synthesis.

In a method for chemical synthesis of methionine, D, L-methionine is produced mainly by hydrolysis of 5-(β-methylmercaptoethyl)-hydantoin) .

As an example of a method for biological synthesis, US Patent No. 7745195 B2 discloses a method in which a microorganism obtained by mutation of cystathionine synthase directly produces homocysteine or methionine using H₂S or CH₃SH without using cysteine. In addition, Korean Patent No. 10-0905381 discloses a two-step process that comprises producing an L-methionine precursor by microbial fermentation and producing L-methionine by an enzymatic conversion reaction using the produced L-methionine precursor as a substrate. US2012/178966A1 discloses a method for producing L-methionine by enzymatic processing and its use in feed.

Conventional chemically produced methionine exists as a mixture of D-methionine and L-methionine, and thus an additional expensive purification process is required to separate only L-methionine from the mixture. Meanwhile, methionine that is produced directly by microorganisms through biological synthesis has the advantage of being the L-form of methionine, but has disadvantages in that it is produced in very small amounts, is difficult to produce in a large scale by fermentation, and is also difficult to obtain as a uniform product by fermentation. For this reason, conventional inexpensive feed additives could not contain L-methionine as a main component.

### Prior Art Documents

### Patent Documents

Patent Document 1: US 7745195 B2 (published on June 29, 2010) ;
Patent Document 2: KR 10-0905381 B1 (published on June 30, 2009) .

### [Disclosure]

### [Technical Problem]

Accordingly, the present inventors have conducted extensive studies to overcome the above-described problems, and as a result, have obtained a large amount of L-methionine by producing an L-methionine precursor through microbial fermentation and converting the L-methionine precursor to L-methionine by an enzymatic reaction. Then, the present inventors have developed a purification process for the enzymatic reaction product, and have found that the developed purification process makes it possible to obtain a composition having uniform quality and a high content of L-methionine and that a feed additive containing this composition exhibits excellent effects in animals, thereby completing the present invention.

Therefore, it is an object of the present invention to provide a feed additive composition having a high content of L-methionine.

Another object of the present invention is to provide an animal feed composition containing the feed additive composition.

### [Technical Solution]

To achieve the above objects, the present invention provides a feed additive composition comprising 60 to 99.90 wt% of L-methionine, 0.05 to 5 wt% of L-phenylalanine and 0.01 to 3 wt% of L-tyrosine.

The present invention also provides an animal feed composition comprising the feed additive composition.

### [Advantageous Effects]

According to the present invention, a large amount of L-methionine is produced by producing an L-methionine precursor through microbial fermentation and converting the L-methionine precursor to L-methionine by an enzymatic reaction, and the produced L-methionine is crystallized. Thus, the present invention advantageously provides a feed additive composition having a high content of L-methionine, which can improve animal nutrition compared to conventional feed additives, and an animal feed composition containing the feed additive composition.

### [Mode for Invention]

Hereinafter, the present invention will be described in detail.

In a first aspect, the present invention provides a feed additive composition having a high content of L-methionine.

The composition having a high content of L-methionine has an increased content of L-methionine. Specifically, the composition may comprise L-methionine, L-phenylalanine and L-tyrosine. In addition, the composition having a high content of L-methionine may further comprise one or more additional nutrient components excluding L-methionine, L-phenylalanine and L-tyrosine. Herein, the nutrient components may include, but are not limited to, other amino acids (excluding L-methionine, L-phenylalanine and L-tyrosine), acetate, and ion.

In the present invention, the composition may be produced by any method that enables the composition to contain a large amount of L-methionine. For example, the composition may be produced by producing L-methionine according to an L-methionine production method comprising a two-step process disclosed in prior art patents, and crystallizing the produced L-methionine, but is not limited thereto.

Specifically, the L-methionine production method comprising the two-step process is disclosed in Korean Patent Nos. 10-0905381, 10-0905381, 10-1136289, 10-1117012, 10-1200179, 10-1250651

More specifically, the L-methionine production method comprising the two-step process comprises the steps of: (1) culturing an L-methionine precursor-producing strain in a medium to produce an L-methionine precursor; and (2) adding an antigen to the L-methionine precursor produced in step (1), followed by an enzymatic reaction to produce L-methionine.

First, the L-methionine precursor can be produced by culturing a mutant or recombinant microorganism, which is capable of producing the same, in a suitable medium. Specifically, examples of the L-methionine precursor include, but are not limited to, O-acylhomoserine, for example, O-acetylhomoserine, O-succinylhomoserine, propionyl homoserine, acetoacetyl homoserine, coumaroyl homoserine, malonyl homoserine, hydroxymethylglutaryl homoserine, or pimelylhomoserine. More specifically, the L-methionine precursor may be O-acetylhomoserine or O-succinylhomoserine. Even more specifically, the L-methionine precursor may be O-acetylhomoserine.

The process for culturing the L-methionine precursor-producing strain may be performed using a suitable medium and culture conditions known in the art, and may be readily adjusted according to the type of strain selected by those skilled in the art. Examples of the culture method include, but are not limited to, batch culture, fed-batch culture and continuous culture. A variety of culture methods are disclosed in, for example, "Biochemical Engineering" by James M. Lee, Prentice-Hall International Editions, pp 138-176.

The medium has to properly meet the requirements for a specific strain. A variety of microbial culture media are disclosed in, for example, "Manual of Methods for General Bacteriology" by the American Society for Bacteriology, Washington D.C., USA, 1981. The culture media may contain various carbon sources, nitrogen sources and trace elements. Examples of the carbon sources include, but are not limited to, carbohydrates such as glucose, sucrose, lactose, fructose, moltose, starch, and cellulose; fats such as soybean oil, sunflower oil, castor oil, and coconut oil; fatty acids such as palmitic acid, stearic acid, and linoleic acid; alcohols such as glycerol and ethanol; and organic acids such as acetic acid. These carbon sources may be used alone or in combination. Examples of the nitrogen sources include, but are not limited to, organic nitrogen sources such as peptone, yeast extract, gravy, malt extract, corn steep liquor (CSL), and bean flour; and inorganic nitrogen sources such as urea, ammonium sulfate, ammonium chloride, ammonium phosphate, ammonium carbonate, and ammonium nitrate. These nitrogen sources may be used alone or in combination. The medium may additionally contain, as a phosphate source, a potassium dihydrogen phosphate, dipotassium hydrogen phosphate and corresponding sodium-containing salts, but is not limited. Furthermore, the medium may contain a metal salt such as, but not limited to, magnesium sulfate or iron sulfate. In addition, amino acids, vitamins and proper precursors may be added to the medium, but are not limited thereto. These media or precursors may be added to the culture in a batch or continuous manner.

During culturing, compounds such as ammonium hydroxide, potassium hydroxide, ammonia, phosphoric acid, and sulfuric acid may be added to the culture in a suitable manner to adjust the pH of the culture. Furthermore, during culturing, a defoaming agent such as fatty acid polyglycol ester may be used to inhibit the generation of bubbles. In addition, to maintain the culture under an aerobic condition, oxygen or oxygen-containing gas (e.g., air) may be injected into the culture.

The temperature of the culture is generally 20 to 45°C, preferably 25 to 40°C. The period of culturing can be continued until the production of L-methionine precursor reaches a wanted level. The period of culturing is preferably 10 to 160 hours, and more preferably 15 to 80 hours.

Next, L-methionine and organic acid can be produced by an enzymatic conversion reaction using the L-methionine precursor, produced by the L-methionine precursor-producing strain, a sulfur source as substrates, and using a converting enzyme or a converting enzyme-containing strain. The converting enzyme may be an enzyme that uses a sulfur source as a substrate. Specifically, the converting enzyme may be an enzyme having cystathionine synthase activity, O-succinylhomoserine sulfhydrylase activity or O-acetylhomoserine sulfhydrylase activity. More specifically, the converting enzyme may be an enzyme having O-acetylhomoserine sulfhydrylase activity. The sulfur source may be a material that provides sulfur element. Specifically, the sulfur source may be methyl mercaptan or its salt. More specifically, the sulfur source may be methyl mercaptan.

In one embodiment, L-methionine can be produced by an enzymatic reaction using O-succinylhomoserine or O-acetylhomoserine, accumulated by microbial fermentation, a sulfur source (such as methyl mercaptan) as substrates, and using an enzyme such as cystathionine gamma synthase, O-succinylhomoserine sulfhydrylase or O-acetylhomoserine sulfhydrylase. Specifically, L-methionine and acetate can be produced using O-acetylhomoserine and methyl mercaptan as substrates and using O-acetylhomoserine sulfhydrylase.

The sequences of the genes encoding the enzymes having activities are readily available from databases such as the National Center for Biotechnology (NCBI) and the Kyoto Encyclopedia of Genes and Genomes (KEGG).

L-methionine produced by the above-described method can be isolated and purified by crystallization, thereby providing a composition having a high content of L-methionine according to the present invention.

Specifically, a method for crystallization of L-methionine may comprise the steps of:
a) concentrating a methionine-containing reaction solution, separating methionine crystals from the concentrated solution, and then recovering the mother liquor; and
b) producing granules from the separated methionine crystals as seeds, and drying the produced granules to obtain methionine powder.

According to a modification of the method for crystallization, the mother liquor separated in step a) is:
a-1) concentrated, crystallized, and mixed with the methionine crystals separated in step b), followed by washing and drying; or
a-2) concentrated, crystallized, dissolved and then added to another methionine-containing reaction solution.

In addition, the method for crystallization may further comprise, before step a), a step of adjusting the methionine-containing reaction solution to a pH of 4.0 to 5.5, and may also further comprise, after the step of adjusting the pH, a step of filtering the methionine-containing reaction through activated carbon.

In one embodiment, to obtain a composition having a high content of L-methionine according to the present invention, the L-methionine-containing reaction solution, obtained by the enzymatic conversion reaction, is concentrated until the concentration of methionine in the reaction solution reaches 150-200 g/L. Alternatively, the L-methionine-containing reaction solution is titrated to a pH of 4.0-5.5 by addition of sulfuric acid, and then concentrated. After concentration, methionine crystals are separated using a crystal separator, and the remaining mother liquor (ML) is recovered. The separated methionine crystals are used as seeds, and the mother liquor is sprayed and dried on the seeds in a granulator to produce powder, thereby obtaining a composition having a high content of L-methionine. The content of L-methionine in the L-methionine-containing composition obtained in this manner may be about 60 to 70 wt% based on the total weight of the composition.

In another embodiment, to obtain a composition having a high content of L-methionine according to the present invention, the L-methionine-containing reaction solution, obtained by the enzymatic conversion reaction, is concentrated until the concentration of methionine in the reaction solution reaches 150-200 g/L. Alternatively, the L-methionine-containing reaction solution is titrated to a pH of 4.0-5.5 by addition of sulfuric acid, and then concentrated. After concentration, primary crystals are separated from the concentrated solution by a crystal separator, and the remaining mother liquor is recovered. The recovered mother liquor is concentrated until the concentration of methionine therein reaches 150-200 g/L, and secondary crystals were separated from the concentrated mother liquor. The obtained primary crystals and secondary crystals are mixed with each other, washed and dried, thereby obtaining a composition having a high content of L-methionine. The content of L-methionine in the L-methionine-containing composition obtained in this manner may be about 80 to 95 wt% based on the total weight of the composition.

In still another embodiment, to obtain a composition having a high content of L-methionine according to the present invention, the L-methionine-containing reaction solution, obtained by the enzymatic conversion reaction, is titrated to a pH of 4.0-5.5 by addition of sulfuric acid. Then, activated carbon is added to the reaction solution in an amount of 0.5-2 wt% based on the weight of methionine, and the mixture is stirred at 50°C for 1-2 hours, and then filtered to remove the activated carbon and impurities. The filtrate is concentrated until the concentration of methionine therein reaches 150-200 g/L. Primary methionine crystals are separated from the concentrated filtrate by a crystal separator. The remaining mother liquor is concentrated again until the concentration of methionine therein reaches 150-200 g/L, thereby obtaining secondary crystals. The obtained second crystals are dissolved and added to another L-methionine-containing reaction solution, thereby obtaining a composition having a high content of L-methionine. The content of L-methionine in the L-methionine-containing composition obtained in this manner may be about 95 to 99.90 wt% based on the total weight of the composition.

The content of L-methionine in the composition of the present invention, obtained by separation and purification as described above, is 60 wt% to 99.90 wt% based on the total weight of the composition. In one embodiment, the composition may comprise about 60 wt% to 70 wt% of L-methionine. In another embodiment, the composition may comprise about 80 wt% to 95 wt% of L-methionine. In still another embodiment, the composition may comprise about 95 wt% to 99.90 wt% of L-methionine.

Specifically, the feed additive composition having a high content of L-methionine, obtained by the purification method as described above, comprises 60 to 99.90 wt% of L-methionine, 0.05 to 5 wt% of L-phenylalanine and 0.01 to 3 wt% of L-tyrosine.

The feed additive composition having a high content of L-methionine further comprises 0.01 to 13 wt% of other amino acids excluding L-methionine, L-phenylalanine and L-tyrosine, in which the other amino acids are one or more selected from the group consisting of glutamate, homoserine, and O-acetylhomoserine.

The content of glutamate in the composition may be 0.01 to 11 wt% based on the total weight of the composition.

The content of homoserine in the composition may be 0.01 to 1 wt% based on the total weight of the composition.

The content of O-acetylhomoserine in the composition may be 0.01 to 1 wt% based on the total weight of the composition.

Moreover, the composition having a high content of L-methionine may further comprise 0.01 to 20 wt% of ion.

In addition, the composition having a high content of L-methionine may further comprise more than 0 wt% but less than 2 wt% of acetate.

The feed additive composition having a high content of L-methionine according to the present invention can be obtained by separating and purifying L-methionine through crystallization as described above, but is not limited thereto. Although not described above, those skilled in the art will appreciate that the feed additive composition according to the present invention may further comprise other nutrient components.

In a second aspect, the present invention provides an animal feed composition comprising the feed additive composition.

The content of the feed additive composition in the animal feed composition may be determined by those skilled in the art, and may be adjusted to a suitable level depending on the kind, age and condition of animal to which the composition is to be applied. Specifically, the feed additive composition is comprised in an amount of 0.01 to 0.5 wt% based on the total weight of the animal feed composition.

The feed additive composition having a high content of L-methionine according to the present invention may be incorporated into a conventional animal feed composition, and may be fed to, for example, cattle, pigs, sheep, poultry and the like. For this, the feed additive composition according to the present invention may be mixed with conventional animal feed components, and may, if necessary, be formulated as tablets.

Conventional animal deed components include, for example, corn, barley, oat, soybean, fish meal, bran, soybean oil, minerals, trace elements, amino acids, and vitamins.

Hereinafter, the present invention will be described in further detail with reference to examples.

### Examples

### Example 1: Fermentation of L-Methionine Precursor-Producing Strain

In this Example, culture in a fermenter was performed to produce an L-methionine precursor. In order to produce a large amount of a methionine precursor (O-acetylhomoserine) using E. coli strain KCCM-10568 (Korean Patent No. 10-0905381), which is an O-acetylhomoserine-producing strain, as a methionine precursor-producing strain, culture in a 5-L fermenter was performed. Specifically, the strain was inoculated onto an LB plate medium containing an antibiotic and was cultured overnight at 31°C. Then, the single colony was inoculated in 10 mL of an antibiotic-containing LB medium and cultured at 31°C for 5 hours. Next, the culture was diluted 100-fold in a 1000-mL Erlenmeyer flask containing 200 mL of methionine precursor seed medium, followed by culture at 31°C and 200 rpm for 3-10 hours. Next, the culture was inoculated into a 5-L fermenter and cultured by fed-batch fermentation for 50-100 hours. The composition of the fermentation medium for main culture is shown in Table 1 below.

**Table 1: Composition of fermentation medium for production of methionine precursor**

| Composition | Seed medium | Main medium | Feed medium |
|---|---|---|---|
| Glucose (g/L) | 10.1 | 40 | 600 |
| M_{G}SO₄·7H₂O (g/L) | 0.5 | 4.2 | |
| Yeast extract (g/L) | 10 | 3.2 | |
| KH₂PO₄ | 3 | 3 | 8 |
| Ammonium sulfate (g/L) | | 6.3 | |
| NH₄Cl (g/L) | 1 | | |
| NaCl (g/L) | 0.5 | | |
| Na₂HPO₄·12H₂O (g/L) | 5.07 | | |
| DL-Methionine (g/L) | | 0.5 | 0.5 |
| L-Isoleucine (g/L) | 0.05 | 0.5 | 0.5 |
| L-Threonine (g/L) | | 0.5 | 0.5 |

### Example 2: Methionine Conversion Reaction

The fermentation product produced in Example 1 was filtered by membrane filtration to separate an O-acetylhomoserine-containing medium from the cells. The liquid that passed through the 0.1-µm membrane, that is, the liquid remaining after separation of the cells, was referred to as permeate, and the cell sludge was referred to as retentate.

Deionized water was added to the retentate to recover O-acetylhomoserine remaining in the retentate.

To the permeate, methyl mercaptan and O-acetylhomoserine sulfhydrylase or *Rhodobacter sphaeroides-derived* O-acetylhomoserine sulfhydrylase (Korean Patent No. 10-1250651) as an enzyme for conversion to L-methionine were added, followed by an enzymatic conversion reaction using either an enzyme having O-acetylhomoserine sulfhydrylase activity or a strain containing the enzyme.

During the reaction, the concentration of the remaining O-acetylhomoserine was measured, and the enzymatic conversion reaction was performed for 6 hours by supply of methyl mercaptan. When the concentration of O-acetylhomoserine was not measured, the reaction was terminated.

### Example 3: Process for Crystallization of L-Methionine

To obtain a composition having a high content of L-methionine, the methionine-containing reaction solution prepared in Example 2 was crystallized. Using the crystallization method described in this Example, a composition containing 60.00 wt% to 99.90 wt% of methionine could be obtained.

### (1) Crystallization Method A

The methionine-containing reaction solution obtained in Example 2 was concentrated until the concentration of methionine in the reaction solution reached 150 to 200 g/L. Methionine crystals were separated from the concentrated solution by a crystal separator, and the remaining mother liquor (ML) was recovered. The separated methionine crystals were used as seeds, and the mother liquor was sprayed and dried on the seeds in a granulator, thereby obtaining a powdered methionine-containing composition.

The components and their contents in the methionine-containing composition obtained according to this method are shown in Table 2 below.

**Table 2**

| Components | Contents (wt%) |
|---|---|
| L-Methionine | 60-70 |
| Acetate | 0-1 |
| Ion | 13-19 |
| Phenylalanine | 0.05-4.5 |
| Tyrosine | 0.02-2.5 |
| Glutamate | 0.5-11 |
| Homoserine | 0.05-1 |
| O-Acetylhomoserine | 0.1-1 |

### (2) Crystallization Method B

The methionine-containing reaction solution obtained in Example 2 was concentrated or titrated to a pH of 4.0-5.5 by addition of sulfuric acid and then concentrated. The reaction solution was concentrated until the concentration of methionine therein reached 150-200 g/L. Primary crystals were separated by a crystal separator, and the remaining mother liquor was recovered. The mother liquor, from which the primary crystals have been separated, were concentrated until the concentration of methionine therein reached 150-200 g/L, thereby obtaining secondary crystals. The primary crystals and the secondary crystals were mixed with each other, washed and dried, thereby obtaining a powdered methionine-containing composition.

The components and their contents in the methionine-containing composition obtained according to this method are shown in Table 3 below.

**Table 3**

| Components | Contents (wt%) |
|---|---|
| L-Methionine | 80-95 |
| Acetate | 0-1 |
| Ion | 0.5-5.5 |
| Phenylalanine | 0.05-4 |
| Tyrosine | 0.01-2 |
| Glutamate | 0.05-5.5 |
| Homoserine | 0.05-1 |
| O-Acetylhomoserine | 0.1-1 |

### (3) Crystallization Method B

The methionine-containing reaction solution obtained in Example 2 was titrated to a pH of 4.0-5.5 by addition of sulfuric acid. Then, activated carbon was added to the reaction solution in an amount of 0.5-2 wt% based on the weight of methionine, and the mixture was stirred at 50°C for 1-2 hours, and then filtered to remove the activated carbon and impurities. The filtrate was concentrated until the concentration of methionine therein reached 150-200 g/L. Methionine crystals were separated from the concentrated filtrate by a crystal separator. The mother liquor remaining after separation of the crystals was concentrated again to obtain secondary crystals. The obtained second crystals were dissolved and added to another L-methionine-containing reaction solution that has been titrated to a pH of 4.0-5.5, after which the resulting reaction solution was subjected to the above-described procedures.

The components and their contents in the methionine-containing composition obtained according to this method are shown in Table 4 below.

**Table 4**

| Components | Contents (wt%) |
|---|---|
| L-Methionine | 95.00-99.90 |
| Acetate | 0-1 |
| Ion | 0.01-0.2 |
| Phenylalanine | 0.05-1 |
| Tyrosine | 0.01-1 |
| Glutamate | 0.01-1 |
| Homoserine | 0.01-0.8 |
| O-Acetylhomoserine | 0.0-0.5 |

### Example 4: Examination of Effect of Methionine-Containing Composition

To examine the effect of the methionine-containing composition obtained in Example 3, a feeding experiment was performed. In this Example, the composition having a high content of L-methionine (hereinafter referred to as L-Met), obtained by the crystallization method C described in Example 3, was used. As a control, a composition containing D,L-methionine (produced by a chemical process and having a purity of 99.99% or higher; hereinafter referred to as D,L-Met) was used.

### (1) Effect of L-Methionine-Containing Composition in 25-Week-Old Laying Hens

Laying hens were treated with each of L-Met and D,L-Met in order to examine the effect of the L-methionine-containing composition on eggs.

### Experimental Design

- 25-week-old laying hens;
- L-Met or D,L-Met was added to a basal diet (BD) in amounts of 0.1 wt% and 0.2 wt%.

**Table 5: Composition of basal diet**

| Components | Contents (%) |
|---|---|
| Corn | 50 |
| Wheat | 7 |
| Wheat Bran | 3 |
| Soybean meal | 26 |
| Others | 14 |

**Table 6: Results**

| Unit % | | Egg production rate (%) | Egg weight (g/egg) | Egg mass (g/day/bird) |
|---|---|---|---|---|
| BD | | 100.0 | 100.0 | 100.0 |
| L-Met | 0.1% | 103.6 | 104.1 | 107.8 |
| | 0.2% | 104.9 | 104.4 | 109.7 |
| DL-Met | 0.1% | 101.9 | 102.7 | 104.6 |
| | 0.2% | 104.6 | 102.7 | 107.4 |
| Percentage for L-Met relative to percentage for DL-Met | 0.1% | 101.6 | 101.3 | 103.1 |
| | 0.2% | 100.3 | 101.7 | 102.1 |

As can be seen from the results in Table 6 above, the control group treated with D,L-Met and the group treated with L-Met all showed better effects on eggs compared to the group treated with the basal diet. The comparison between the group treated with L-Met and the group treated with D,L-Met indicated that the egg production rate and egg weight of the group treated with L-Met were increased by about 1% and the egg mass of the group treated with L-Met was increased by about 2-3%.

This suggests that addition of L-Met results in positive effects on lying hens compared to addition of D,L-Met.

### (2) Effect of L-Methionine-Containing Composition in Piglets

In order to examine the effect of the L-methionine-containing composition in piglets, the piglets were treated with each of L-Met and D,L-Met, and then average daily gain was compared between the group treated with L-Met and the group treated with D,L-Met.

### Experimental Design

- Piglets;
- L-Met or D, L-Met was added to a basal diet (BD) in amounts of 0.05 wt% and 0.11 wt%.

**Table 7: Composition of basal diet**

| Components | Contents (%) |
|---|---|
| Corn | 60.7 |
| SBM | 3.0 |
| Plasma protein | 11.0 |
| Whey dried | 20.0 |
| Grease | 1.0 |
| Sand | |
| Corn starch | 0.5 |
| others | 3.8 |

**Table 8: Results**

| ADG (kg/day) | Basal diet | Added DL-Met (%) | | Added L-Met (%) | |
|---|---|---|---|---|---|
| | | 0.05 | 0.11 | 0.05 | 0.11 |
| 0-7 days | 100.0 | 151.6 | 159.1 | 171.1 | 201.9 |
| 14-21 days | 100.0 | 120.6 | 126.9 | 125.3 | 132.2 |

| | | | | | |
|---|---|---|---|---|---|
| *ADG: average daily gain. | | | | | |

As can be seen from the results in Table 8 above, the comparison of average daily gain between the piglet group treated with the basal diet and the piglet group treated with D,L-Met or L-Met indicated that the average daily gain was increased by about up to 60% in the group treated with D,L-Met and about up to 100% in the group treated with L-Met. Furthermore, the comparison of average daily gain between the group treated with D,L-Met and the group treated with L-Met indicated that the average daily gain of the group treated with L-Met was about 5-40% higher than that of the group treated with D,L-Met.

### (3) Effect of L-Methionine-Containing Composition in Broiler Chickens

In order to examine the effect of the L-methionine-containing composition in broiler chickens, the broiler chickens were treated with each of L-Met and D,L-Met, and then the gain-to-feed ratio (G: F ratio) was compared between the broiler chickens.

### Experimental Design

- 1-day-old broiler chickens (ross308);
- L-Met or D, L-Met was added to a basal diet (BD) in amounts of 0.1 wt%, 0.2 wt% and 0.3 wt%.

**Table 9: Composition of basal diet**

| Components | Contents (%) |
|---|---|
| Yellow corn | 59 |
| Soybean meal | 34 |
| Others | 7 |

**Table 10: Results**

| Gain: feed | BD (%) | Added DL-Met (%) | | | Added L-Met (%) | | | Percentage for L-Met relative to percentage for DL-Met | | |
|---|---|---|---|---|---|---|---|---|---|---|
| | | 0.1 | 0.2 | 0.3 | 0.1 | 0.2 | 0.3 | 0.1 | 0.2 | 0.3 |
| 0-7 days | 100.0 | 102.0 | 101.2 | 102.0 | 102.8 | 106.1 | 106.1 | 100.8 | 104.8 | 104.0 |
| 7-14 days | 100.0 | 111.9 | 112.7 | 114.1 | 113.9 | 114.8 | 115.8 | 101.8 | 101.9 | 101.5 |
| 14-21 days | 100.0 | 116.1 | 118.1 | 118.6 | 116.7 | 122.1 | 124.7 | 100.6 | 103.4 | 105.2 |
| 0-21 days | 100.0 | 112.8 | 113.9 | 114.7 | 113.9 | 117.4 | 119.2 | 101.0 | 103.1 | 103.9 |

As can be seen from the results in Table 10 above, the gain-to-feed ratio increased in all the groups treated with the mixture of the basal diet with L-Met or DL-Met. The comparison of the gain-to-feed ratio between the group treated with L-Met and the group treated with D,L-Met indicated that the group treated with L-Met showed a high increase in gain-to-feed ratio of 0.5% to 5% throughout the period of the experiment, and also showed a high increase in gain-to-feed ratio of about 1-4% even in the late stage of the experiment.

## Claims

1. A feed additive composition consisting of 60 to 99.90 wt% of L-methionine, 0.05 to 5 wt% of L-phenylalanine, 0.01 to 3 wt% of L-tyrosine, 0.01 to 20 wt% of ion, more than 0 wt% but less than 2 wt% of acetate, and 0.01 to 13 wt% of other amino acids excluding L-methionine, L-phenylalanine and L-tyrosine, wherein the other amino acids are one or more selected from the group consisting of glutamate, homoserine, and O-acetylhomoserine.

2. The feed additive composition of claim 1, wherein the other amino acids include glutamate, and a content of the glutamate in the composition is 0.01 to 11 wt% based on the total weight of the composition.

3. The feed additive composition of claim 1, wherein the other amino acids include homoserine, and a content of the homoserine in the composition is 0.01 to 1 wt% based on the total weight of the composition.

4. The feed additive composition of claim 1, wherein the other amino acids include O-acetylhomoserine, and a content of the O-acetylhomoserine in the composition is 0.01 to 1 wt% based on the total weight of the composition.

5. An animal feed composition comprising 0.01 to 0.5 wt% of the composition of any one of claims 1 to 4.

## Patentansprüche

1. Futtermittelzusatzzusammensetzung, bestehend aus 60 bis 99,90 Gew.-% L-Methionin, 0,05 bis 5 Gew.-% L-Phenylalanin, 0,01 bis 3 Gew.-% L-Tyrosin, 0,01 bis 20 Gew.-% Ionen, mehr als 0 Gew.-%, aber weniger als 2 Gew.-% Acetat, und 0,01 bis 13 Gew.-% sonstigen Aminosäuren mit Ausnahme von L-Methionin, L-Phenylalanin und L-Tyrosin, wobei die sonstigen Aminosäuren eine oder mehrere sind, ausgewählt aus der Gruppe bestehend aus Glutamat, Homoserin und O-Acetylhomoserin.

2. Futtermittelzusatzzusammensetzung nach Anspruch 1, wobei die sonstigen Aminosäuren Glutamat einschließen und ein Gehalt des Glutamats in der Zusammensetzung 0,01 bis 11 Gew.-%, bezogen auf das Gesamtgewicht der Zusammensetzung, beträgt.

3. Futtermittelzusatzzusammensetzung nach Anspruch 1, wobei die sonstigen Aminosäuren Homoserin einschließen und ein Gehalt des Homoserins in der Zusammensetzung 0,01 bis 1 Gew.-%, bezogen auf das Gesamtgewicht der Zusammensetzung, beträgt.

4. Futtermittelzusatzzusammensetzung nach Anspruch 1, wobei die sonstigen Aminosäuren O-Acetylhomoserin einschließen und ein Gehalt des O-Acetylhomoserins in der Zusammensetzung 0,01 bis 1 Gew.-%, bezogen auf das Gesamtgewicht der Zusammensetzung, beträgt.

5. Tierfutterzusammensetzung, umfassend 0,01 bis 0,5 Gew.-% der Zusammensetzung nach einem der Ansprüche 1 bis 4.

## Revendications

1. Composition d'additif alimentaire constituée de 60 à 99,90 % en poids de L-méthionine, 0,05 à 5 % en poids de L-phénylalanine, 0,01 à 3 % en poids de L-tyrosine, 0,01 à 20 % en poids d'ion, plus de 0 % en poids mais moins de 2 % en poids d'acétate, et 0,01 à 13 % en poids d'autres acides aminés à l'exclusion de la L-méthionine, de la L-phénylalanine et de la L-tyrosine, dans laquelle les autres acides aminés sont un ou plusieurs choisis dans le groupe constitué du glutamate, de l'homosérine et de l'O-acétylhomosérine.

2. Composition d'additif alimentaire selon la revendication 1, dans laquelle les autres acides aminés incluent du glutamate, et une teneur du glutamate dans la composition est de 0,01 à 11 % en poids sur la base du poids total de la composition.

3. Composition d'additif alimentaire selon la revendication 1, dans laquelle les autres acides aminés incluent de l'homosérine, et une teneur de l'homosérine dans la composition est de 0,01 à 1 % en poids sur la base du poids total de la composition.

4. Composition d'additif alimentaire selon la revendication 1, dans laquelle les autres acides aminés incluent de l'O-acétylhomosérine, et une teneur de l'O-acétylhomosérine dans la composition est de 0,01 à 1% en poids sur la base du poids total de la composition.

5. Composition d'aliment pour animaux comprenant 0,01 à 0,5 % en poids de la composition selon l'une quelconque des revendications 1 à 4.
